**Europäisches Patentamt**

**European Patent Office**

**Office européen des brevets**

(11) Numéro de publication : **0 442 057 B1**

(12) **FASCICULE DE BREVET EUROPEEN**

(45) Date de publication du fascicule du brevet :
29.12.93 Bulletin 93/52

(51) Int. Cl.⁵ : **G01N 5/02**

(21) Numéro de dépôt : **90122788.4**

(22) Date de dépôt : **29.11.90**

(54) **Procédé et appareil de mesure de l'absorptivité d'une poudre.**

(30) Priorité : **02.02.90 CH 345/90**

(43) Date de publication de la demande :
**21.08.91 Bulletin 91/34**

(45) Mention de la délivrance du brevet :
**29.12.93 Bulletin 93/52**

(84) Etats contractants désignés :
**AT BE CH DE DK ES FR GB GR IT LI LU NL SE**

(56) Documents cités :
**US-A- 4 271 698**
**US-A- 4 862 730**
**PATENT ABSTRACTS OF JAPAN, vol. 10, no. 195 (P-475)[2251], 9 juillet 1986; & JP-A-61 38 444**

(73) Titulaire : **SOCIETE DES PRODUITS NESTLE S.A.**
**Case postale 353**
**CH-1800 Vevey (CH)**

(72) Inventeur : **Seiler, Alfred**
**Rte du Jorat 31, Montblesson**
**CH-1000 Lausanne 27 (CH)**

Jouve, 18, rue Saint-Denis, 75001 PARIS

## Description

La présente invention a trait à un procédé de mesure de l'absorptivité d'une poudre, c'est-à-dire de la quantité de liquide que peut absorber cette poudre durant un laps de temps donné, ainsi qu'à un appareil de mesure permettant la mise en oeuvre de ce procédé.

Il est connu, par US-A-4 271 698, un appareil permettant de mesurer la diffusion d'un liquide dans des solides, comprenant une partie supérieure et une partie inférieure reliées à une échelle gravimétrique, ainsi que des moyens pour retenir les solides, lesdits moyens étant perméables audit liquide.

Il est également connu, par US-A-4 862 730, une méthode pour déterminer le degré de transmission de vapeur de certains matériaux, dans laquelle on utilise un récipient contenant une solution saturée de sel et une membrane perméable à la vapeur.

Afin d'améliorer le contrôle de la qualité des produits alimentaires, ainsi que pour permettre le développement de produits nouveaux et meilleurs par des procédés plus rapides ou moins onéreux par exemple, il est préférable de disposer de tests fiables et reproductibles permettant de mesurer les propriétés desdits produits alimentaires se présentant sous forme de poudre à dissolution rapide, tels que, par exemple, le lait, le café ou le chocolat en poudre, ou encore les potages ou sauces déshydratés.

Les propriétés de mouillabilité et/ou immersibilité et/ou dispersibilité d'une poudre dans un liquide semblant être liées à l'absorptivité de cette poudre, c'est-à-dire à son pouvoir d'absorption dudit liquide, il peut être intéressant de disposer d'un procédé fiable permettant de mesurer l'absorptivité des poudres.

La présente invention a donc pour objet de proposer un procédé de mesure de l'absorptivité d'une poudre, dans lequel on place une quantité déterminée de ladite poudre dans un récipient dont le fond est constitué par une membrane, caractérisé par le fait qu'on dépose ledit récipient rempli sur une plaque de verre fritté elle-même en contact avec la surface d'un liquide et l'on détermine, après un temps donné, le poids de liquide absorbé par la poudre et le poids de poudre mouillée.

Un avantage de ce procédé est d'être aisément répétable, et de permettre d'obtenir des résultats reproductibles.

Un autre avantage de ce procédé est de ne laisser qu'une faible part aux erreurs de manipulation et/ou d'appréciation.

La présente invention a aussi pour objet un appareil de mesure de l'absorptivité d'une poudre, susceptible d'être utilisé pour la mise en oeuvre du procédé selon la revendication 1, comprenant un bac destiné à contenir un liquide, une plaque de verre fritté disposée à distance du fond dudit bac et destinée à être mise en contact avec la surface du liquide et un récipient dont le fond est constitué par une membrane.

L'appareil selon la présente invention comprend un bac destiné à contenir un liquide.

Le bac peut être de toute forme et de toute dimension.

Il peut s'agir, par exemple, d'un bac de grande dimension, à fond plat et peu profond, qui peut délimiter une surface de liquide égale à un multiple de la surface de la plaque de verre fritté.

On peut choisir, par exemple, un bac en verre d'un diamètre de 200-300 mm et d'une hauteur de 40-60 mm, pour une plaque de verre fritté de 25-80 mm de diamètre et 5-15 mm de hauteur, de manière que le volume de liquide absorbé par la poudre soit négligeable par rapport au volume total de liquide contenu dans le bac, et que la diminution du volume total de liquide contenu dans le bac ne modifie pas de façon sensible le niveau dudit liquide dans ledit bac.

L'appareil selon la présente invention comprend aussi une plaque de verre fritté.

Il peut s'agir, par exemple, d'une plaque de verre fritté présentant une porosité élevée, qui peut permettre, d'une manière reproductible, le passage, par effet de capillarité, du liquide dans le récipient.

On peut utiliser, par exemple, une plaque de verre fritté se présentant sous forme d'une rondelle de 5 à 15 mm de hauteur et de 25 à 80 mm de diamètre.

La plaque de verre fritté est destinée à être mise en contact avec la surface du liquide contenu dans le bac. Pour tenir cette plaque à distance du fond du bac, on peut, par exemple, la poser sur un cadre disposé sur le fond du bac et destiné à être immergé dans ledit liquide.

L'appareil selon la présente invention comprend aussi un récipient dont le fond est constitué par une membrane. Ce récipient peut se présenter, par exemple, sous la forme d'un cylindre en verre ou en matière plastique, d'une hauteur de 20-80 mm environ, et d'un diamètre intérieur de l'ordre de 25-80 mm.

On choisit, de préférence, un diamètre intérieur égal ou légèrement inférieur au diamètre de la plaque de verre fritté, de manière à obtenir une surface de contact optimale entre ladite plaque et le fond du récipient. Le récipient peut rester ouvert par sa face supérieure pendant tout ou partie de la mesure.

Le fond du récipient, ou face inférieure, est, quant à lui, constitué par une membrane.

Cette membrane peut être un tissu perméable tel que, par exemple, une feuille de papier tissé ou un mouchoir en papier jetable, susceptible de laisser pénétrer le liquide par capillarité depuis le bac à travers la plaque de verre fritté, dans le récipient. On choisit, de préférence, une membrane à absorption rapide et de porosité élevée, présentant une faible résistance au flux du liquide.

On peut fixer la membrane audit récipient, par exemple à l'aide de papier adhésif ou d'un élastique.

Afin de mettre en oeuvre le procédé selon la présente invention, on peut placer une quantité déterminée de poudre dans le récipient.

On peut utiliser, par exemple, une poudre de lait ou de café lyophilisé.

On peut, par exemple, remplir entièrement le récipient, compacter la poudre par vibration ou par tassement de manière à obtenir une densité apparente maximum, c'est-à-dire un remplissage maximum tout en conservant aux grains de poudre leur intégrité, sans les déformer, puis compléter avec de la poudre et compacter à nouveau.

On peut alors ôter l'excédent de poudre par exemple en raclant la surface du récipient avec un racloir, de manière à obtenir un volume de poudre équivalent au volume intérieur du récipient.

Le poids du récipient ayant été préalablement déterminé, on peut donc déterminer, par exemple par pesée, le poids de la poudre contenue dans le récipient, ainsi que sa densité apparente.

On peut déposer ensuite le récipient contenant la poudre sur la plaque de verre fritté, elle-même en contact avec le liquide contenu dans le bac.

Le liquide contenu dans le bac est maintenu, de préférence, à une température constante et contrôlée pendant la mesure, par exemple à une température de l'ordre de 20-25°C.

Ce liquide peut être, par exemple, de l'eau distillée. Le liquide peut alors pénétrer par effet de capillarité, à travers la plaque de verre fritté et la membrane, dans le récipient où il peut mouiller la poudre.

On peut laisser le récipient sur la plaque de verre fritté pendant un temps donné, par exemple pendant 3 à 5 minutes pour une poudre de lait.

Ce temps ne doit pas être trop court, afin de permettre au liquide de pénétrer dans le récipient.

Ce temps ne doit pas non plus être trop long, afin d'éviter une éventuelle dissolution de la poudre, ce qui pourrait entraîner la migration du produit dans le récipient, à travers la plaque de verre fritté.

En outre, après une phase initiale d'absorption rapide du liquide par la poudre, il peut se former, au fond du récipient, un amas gélifié compact, qui peut empêcher toute progression ultérieure du liquide. Il est donc recommandé de laisser le récipient sur la plaque de verre fritté au moins jusqu' au moment environ où l'absorption s'arrête, et de ne pas l'y laisser beaucoup plus longtemps.

Lorsque ce temps s'est écoulé, on peut ôter le récipient de la plaque de verre fritté et déterminer, par exemple par pesée, le poids de liquide absorbé par la poudre.

On peut ensuite ôter du récipient la poudre qui n'a pas été mouillée. Pour ce faire, on peut, par exemple, retourner le récipient et, par de légers tapotements, en faire tomber la poudre sèche, la poudre mouillée restant dans le récipient.

On peut alors déterminer, par exemple par pesée, le poids de matière sèche de poudre mouillée et en déduire le poids de poudre restée sèche.

On peut définir l'absorptivité de la poudre à l'aide de deux grandeurs indépendantes:
- le poids de liquide absorbé par unité de poids de matière sèche de poudre mouillée $\alpha$ et
- le poids de matière sèche de poudre mouillée par unité de surface de contact $\omega$.

Ces deux grandeurs sont spécifiques de la poudre et du liquide utilisés, pour une densité apparente de poudre donnée et pour un temps de contact donné.

L'appareil pour mesurer l'absorptivité selon la présente invention est décrit ci-après en référence au dessin dans lequel:

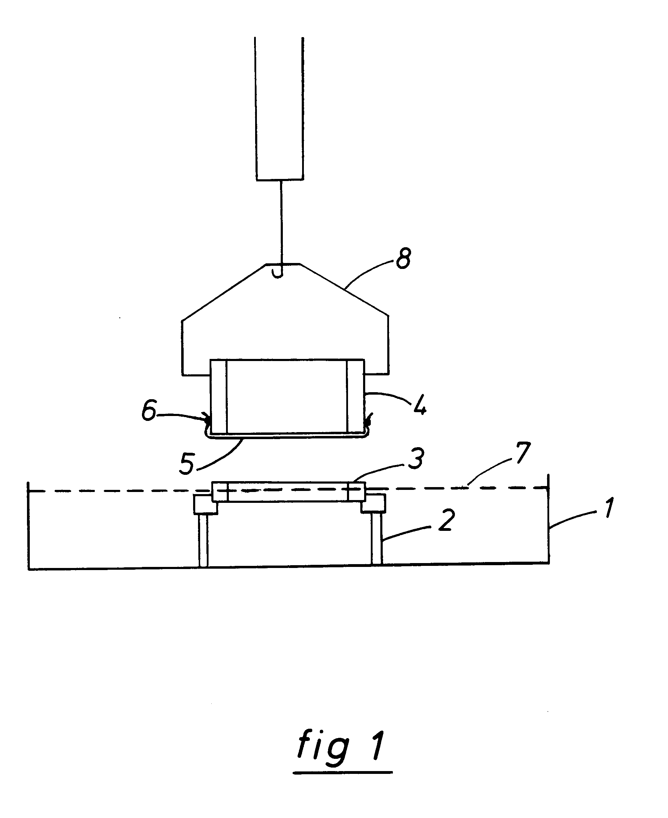

- la figure 1 représente une vue schématique en coupe verticale d'une forme particulière d'exécution.

Dans la forme d'exécution représentée à la figure 1, le présent appareil se compose d'un bac 1 circulaire à fond plat, d'un cadre métallique 2 sur lequel est posé une plaque de verre fritté 3, et d'un récipient cylindrique 4, dont le fond est constitué par une membrane 5 en tissu perméable fixée audit récipient par un élastique 6.

Le bac 1 est destiné à être rempli d'un liquide jusqu'au niveau 7, correspondant à la moitié de la hauteur de ladite plaque de verre fritté.

Le récipient une fois rempli de poudre peut être déposé sur ladite plaque à l'aide d'un système de suspension 8.

L'invention est illustrée plus en détails dans les exemples ci-après.

## Exemple 1

On pèse un récipient cylindrique en verre, d'une hauteur de 25 mm, de diamètre intérieur de 40 mm, et dont le fond est constitué par un tissu perméable de type mouchoir en papier jetable, fixé audit récipient par un élastique.

On obtient un poids R correspondant au poids du récipient.

On place dans ce récipient une poudre de lait déshydraté, on compacte par tassement, on complète et l'on compacte à nouveau, puis on ôte l'excédent de poudre par raclage.

On pèse à nouveau le récipient contenant la poudre. On obtient un poids (R+P) correspondant au poids du récipient et de la poudre.

On peut en déduire le poids P de poudre contenue dans le récipient.

Le récipient est ensuite déposé sur une plaque de verre fritté se présentant sous la forme d'une rondelle de 10 mm de hauteur et de 40 mm de diamètre. Cette plaque de verre fritté est posée sur un cadre métallique de 30 mm de hauteur, disposé sur le fond d'un bac à fond plat, ledit bac étant d'une hauteur de 50 mm et d'un diamètre de 250 mm. La plaque de verre frittée est à demi immergée dans de l'eau à 25°C.

La mesure est réalisée à une température de l'ordre de 24-25°C.

On laisse le récipient sur la plaque de verre fritté pendant 4 minutes puis on le pèse à nouveau.

On obtient un poids (R+P+E) correspondant au poids du récipient, de la poudre qu'il contient et de l'eau absorbée par la poudre.

On peut en déduire le poids E d'eau absorbée par la poudre.

Le récipient est alors retourné afin d'en faire tomber la poudre n'ayant pas été mouillée.

On peut légèrement taper les côtés du récipient afin de bien enlever toute la poudre restée sèche.

On pèse à nouveau le récipient ne contenant plus que la poudre mouillée et l'on obtient un poids (R+PM+E) correspondant au poids du récipient, de l'eau absorbée et du poids de matière sèche de poudre ayant été mouillée.

On peut en déduire le poids PM de matière sèche de poudre ayant été mouillée par l'eau absorbée.

On peut alors déterminer le poids de liquide absorbé par unité de poids de matière sèche de poudre ayant été mouillée, c'est-à-dire le rapport E/PM, correspondant à la grandeurs $\alpha$.

On peut aussi déterminer le poids de matière sèche de poudre mouillée par unité de surface de contact entre la poudre et le liquide, c'est-à-dire la grandeur $\omega$.

Les deux grandeurs sont spécifiques d'une poudre et d'un liquide donnés, pour une densité apparente et un temps de contact donnés.

## Exemple 2

Afin de tester la reproductibilité des résultats, on mesure, selon la méthode décrite à l'exemple 1, l'absorptivité d'une poudre de gel de silice, poudre non soluble, de qualité constante et de mouture comprise entre 0,07 mm et 0,2 mm.

On détermine le poids d'eau absorbée en fonction du temps de contact, pour un poids de poudre initial de 15,0 g.

On obtient les résultats suivants, pour trois tests successifs effectués:

|  |  | temps de contact (s) | | | | | | | | |
|---|---|---|---|---|---|---|---|---|---|---|
|  |  | 0 | 3 | 6 | 9 | 12 | 15 | 18 | 21 | 24 |
| poids | test 1 | 0 | 4,8 | 7,7 | 9,8 | 11,3 | 12,9 | 14,2 | 15,1 | 15.6 |
| d'eau | test 2 | 0 | 5,0 | 8,0 | 9,9 | 11,3 | 12,6 | 14,0 | 15,0 | 15,5 |
| (g) | test 3 | 0 | 5,3 | 8,1 | 10,1 | 11,3 | 12,6 | 13,9 | 15,0 | 15,5 |

d'où les valeurs: $\alpha$ = 1,05 et $\omega$ =1,19 g/cm$^2$.

On constate que la poudre de gel de silice absorbe l'eau jusqu'à ce que toute la poudre soit mouillée, c'est-à-dire pendant 24 secondes. Au-delà, l'eau n'est plus absorbée.

Les résultats obtenus présentent une déviation standard de 2%. On peut donc considérer que le présent procédé de mesure permet d'obtenir des résultats reproductibles.

## Exemple 3

On mesure l'absorptivité de quatre poudres de lait selon la méthode de l'exemple 1, en utilisant:

- un récipient présentant un diamètre intérieur de 40 mm, d'où une surface de contact de 12,56 cm$^2$,
- comme membrane, un mouchoir en papier jetable,
- de l'eau distillée à 25°C,
- un temps de contact de 4 minutes.

On désigne par:

- R: le poids du récipient, soit 21,29 g.
- P: le poids de poudre contenue initialement dans le récipient
- E: le poids d'eau absorbée par la poudre en 4 minutes
- PM: le poids de matière sèche de poudre ayant absorbé l'eau, c'est-à-dire la poudre mouillée.

On obtient les résultats suivants:

| Lait | R+P (g) | R+P+E (g) | R+PM+E (g) | P (g) | E (g) | PM (g) |
|------|---------|-----------|------------|-------|-------|--------|
| A | 34,49 | 35,97 | 24,53 | 13,20 | 1,48 | 1,76 |
| B | 34,75 | 36,21 | 24,41 | 13,46 | 1,46 | 1,66 |
| C | 35,77 | 36,76 | 23,14 | 14,48 | 0,99 | 0,86 |
| D | 34,43 | 35,96 | 24,55 | 13,14 | 1,53 | 1,73 |

On peut alors caractériser l'absorptivité de chaque poudre à l'aide des deux grandeurs $\alpha$ et $\omega$, définies par $\alpha = \dfrac{E}{PM}$ et $\omega = \dfrac{PM}{S}$,

S étant la surface de contact.

On obtient les résultats suivants:

| Lait | $\alpha$ | $\omega$ (g/cm$^2$) |
|------|----------|---------------------|
| A | 0,84 | 0,140 |
| B | 0,88 | 0,132 |
| C | 1,15 | 0,069 |
| D | 0,88 | 0,138 |

On constate que la poudre de lait C absorbe une quantité d'eau, par unité de poids de matière sèche de poudre mouillée, plus importante que les autres poudres ( $\alpha$ élevé), mais que très peu de poudre est mouillée ($\omega$ faible). Cette poudre absorbe donc l'eau rapidement, mais pendant un temps très bref, un amas gélifié compact se formant rapidement, et la quantité d'eau totale absorbée est plus faible.

A l'opposé, la poudre de lait D absorbe l'eau plus lentement, l'amas gélifié se forme plus tard et la quantité d'eau totale absorbée est plus importante.

Les propriétés de mouillabilité et/ou d'immersibilité et/ou de dispersibilité de la poudre C sont donc inférieures à celles des autres poudres testées.

**Revendications**

1. Procédé de mesure de l'absorptivité d'une poudre, dans lequel on place une quantité déterminée de ladite poudre dans un récipient dont le fond est constitué par une membrane, caractérisé par le fait qu'on dépose ledit récipient rempli sur une plaque de verre fritté elle-même en contact avec la surface d'un liquide et l'on détermine, après un temps donné, le poids de liquide absorbé par la poudre et le poids de poudre

EP 0 442 057 B1

mouillée.

2.  Appareil de mesure de l'absorptivité d'une poudre, susceptible d'être utilisé pour la mise en oeuvre du procédé selon la revendication 1, comprenant un bac (1) destiné à contenir un liquide, une plaque (3) de verre fritté disposée à distance du fond dudit bac et destinée à être mise en contact avec la surface du liquide et un récipient (4) dont le fond est constitué par une membrane (5).

3.  Appareil de mesure selon la revendication 2, dans lequel la plaque (3) de verre fritté est posée sur un cadre (2) disposé sur le fond du bac et destiné à être immergé dans le liquide.

4.  Appareil de mesure selon la revendication 2, dans lequel la membrane constituant le fond du récipient est un tissu perméable, à absorption rapide et de porosité élevée.

## Claims

1.  Verfahren zur Messung der Absorptionsfähigkeit eines Pulvers, bei dem eine bestimmte Menge des Pulvers in einen Behälter eingebracht wird, dessen Boden aus einer Membran besteht, dadurch gekennzeichnet, daß der gefüllte Behälter auf eine Sinterglasplatte aufgesetzt wird, die ihrerseits mit der Oberfläche einer Flüssigkeit in Kontakt ist, und daß nach einer bestimmten Zeit das Gewicht der vom Pulver absorbierten Flüssigkeit und das Gewicht des benetzten Pulvers bestimmt werden.

2.  Vorrichtung zum Messen der Absorptionsfahigkeit eines Pulvers, die zur Durchführung des Verfahrens nach Anspruch 1 verwendet werden kann und eine Wanne (1) zur Aufnahme einer Flüssigkeit, eine Sinterglasplatte (3), die in einem Abstand vom Boden der Wanne angeordnet ist und dazu bestimmt ist, mit der Oberfläche der Flüssigkeit in Kontakt gebracht zu werden, und einen Behälter (4) besitzt, dessen Boden aus einer Membran (5) besteht.

3.  Vorrichtung nach Anspruch 2, bei der die Sinterglasplatte (3) auf einem Rahmen (2) aufliegt, der auf dem Boden der Wanne angeordnet ist und dazu bestimmt ist, in die Flüssigkeit eingetaucht zu werden.

4.  Vorrichtung nach Anspruch 2, bei der die den Boden des Behälters bildende Membran ein durchlässiger Stoff mit schneller Absorption und hoher Porosität ist.

## Claims

1.  A process for measuring the absorptivity of a powder in which a predetermined quantity of the powder is placed in a container of which the base is formed by a membrane, characterized in that the filled container is placed on a plate of fritted glass which is itself in contact with the surface of a liquid and the weight of liquid absorbed by the powder and the weight of the wetted powder are determined after a given time.

2.  An apparatus for measuring the absorptivity of a powder suitable for carrying out the process claimed in claim 1, comprising a tank (1) intended to hold a liquid, a plate (3) of fritted glass arranged at a distance from the bottom of the tank and intended to be brought into contact with the surface of the liquid and a container (4) of which the base is formed by a membrane (5).

3.  A measuring apparatus as claimed in claim 2, in which the plate (3) of fritted glass is placed on a frame (2) arranged on the bottom of the tank and intended to be immersed in the liquid.

4.  A measuring apparatus as claimed in claim 2, in which the membrane forming the base of the container is a permeable cloth characterized by rapid absorption and high porosity.

6

_fig 1_